# EUROPEAN PATENT APPLICATION

(11) **EP 0 669 191 A1**
(43) Date of publication of application: **30.08.1995**
(21) Application number: 95301207.7
(22) Date of filing: 24.02.1995
(51) Int. Cl.: B27K 3/52, B27K 3/50

(54) **A biocide composition for the treatment of timber**

(30) Priority: 24.02.1994 ZA 941276
(71) Applicant: TIMBERQUEST INTERNATIONAL (PTY) LTD, Wynberg, Sandton 2146 (SA)
(72) Inventor: Pizzi, Antonio, Apinal, Cedex (FR); Baecker, Albin Alexander Wladyslaw, Westville 3630 (ZA)
(74) Representative: Daniels, Jeffrey Nicholas

(57) **Abstract**

A biocide composition for the treatment of timber comprises two bonding agents in mixture, one bonding agent having a fungicide bonded therewith and the other bonding agent having a termiticide bonded therewith. One bonding agent comprises carboxylic acid groups of a resin acid of rosin and the other bonding agent comprises carboxylic acid groups of a synthetic unsaturated polyester resin, an unsaturated fatty acid of an oil or an unsaturated fatty acid of a wax. The bonding agents complement one another to ensure the effective application of the composition to timber, for the treatment thereof and also the effective retention of the composition in the timber to which it has been applied.

## Description

**THIS INVENTION** relates to a biocide composition for the treatment of timber.

It is known that untreated wood which is in soil contact, while in service, is extremely susceptible to colonisation by fungi and termites, causing deterioration of the cellulose, lignin and hemicelluloses therein, weight and strength loss of the wood, failure of the wood and associated economic losses. Such bio-deterioration may be caused by staining fungi, soft rot fungi, white rot decay fungi, brown rot decay fungi and insects such as wood borers and termites.

Although different biocide compositions are known, these have not proved entirely satisfactory for the treatment of wood in soil contact in all conditions and it is an object of this invention to provide a biocide composition which is suitable for the treatment of wood, particularly while in soil contact. It must be understood, however, that although the biocide composition of this invention is considered to be particularly suitable for the purpose set out above, it can be used also for the treatment of other forms of timber, or other materials requiring treatment against fungi and insects.

According to the invention there is provided a biocidal composition which comprises a mixture including
carboxylic acid groups of a resin acid of rosin, forming a first bonding agent; and
carboxylic acid groups of one of a synthetic unsaturated polyester resin, an unsaturated fatty acid of an oil and an unsaturated fatty acid of a wax, forming a second bonding agent,
one bonding agent having a fungicide bonded therewith and the other bonding agent having a termiticide bonded therewith.

The fungicide preferably is of a type that can treat wood against the above various decay fungi. As such, the fungicide may be a formulation of any one of copper sulphate; chromated copper arsenate; ammoniacal copper zinc arsenate; ammoniacal copper arsenate; and a mixture of these formulations of copper.

Alternatively, the fungicide may be an anti-fungal formulation of any one of an alkylammonium compound such as the quaternary ammonium compound didecylmethylammonium chloride; ammoniacal copper-alkylammonium compounds such as the ammoniacal copper quaternary ammonium compound known as ammoniacal copper-didecylmethylammonium chloride; and a mixture thereof. Typically, the quaternary ammonium compound didecylmethylammonium chloride is normally leachable, but when bonded with the carboxylic acid is fixable to wood in order to serve the required purpose.

Still alternatively, the fungicide is a formulation such as a triazine herbicidal compound falling within a group including atrazine; simazine, duiron; terbuthylazine; alachlor; bromacil; metolachlor and a precursor of these such as 2,4,6, trichloro-1,3,5 triazine; and a mixture thereof.

Still alternatively, the biocide composition may be a formulation falling within the group including oxine copper known as copper 8-quinolinolate, which is a copper chelate with 8-hydroxy quinoline with the oil soluble form being made from nickel-2-ethyl hexoate; a substituted isothiazolone such as 4,5-dichloro-2-n-octyl-4-isothiazolin-3-one; 2,4,5,6-tetrachloroisophthalonitrile known as chlorothalonil at 4.0 - 8,0kg per cubic metre of wood; a thiazole such as 2-thiocyanomethylthiobenzothiazole (TCMTB); methylene-bis-thiocyanate (MBT); a carbamate such as 3-iodo-propenyl butyl carbamate; a triazole such as one of those known as azaconazole, propiconazole or tebuconazole; and a mixture of any two or more of the above.

The termiticide may be of a type suitable for treating wood specifically against subterranean termites. As such, the termiticide may be one of chlorpyriphos; silafluofen; and one of the pyrethroids. Alternatively, the termiticide may be of a type showing activity also against decay fungi. As such, the termiticide may have an active ingredient including one of an inorganic boron compound such as borax; boric acid; and disodiumoctaborate tetrahydrate. The termicide alternatively may be one of copper 8 quinolate; zinc naphthanate; and copper naphthanate. All the above termiticides have a broad range efficacy against decay fungi and insects in laboratory tests and in both above ground and below ground field studies. Retentions ranging from 0,8 to 5,0% of a kilogram per cubic metre of wood are suggested.

Further according to the invention, the rosin is a cheap, simple to use and non-toxic type rosin which is reacted with sodium sulphate to form the sodium soap of the rosin. For example, if the chosen fungicide is copper, the sodium soap of the rosin is reacted with copper sulphate to give the copper soap of the rosin and sodium sulphate. The copper soap is floated off and then dissolved in a suitable solvent (which could be emulsified to render it water-borne) for impregnation into wood. The solvent will evaporate off while the soap will fix chemically to the wood. The rate of fixation can be raised by heat fixation or the use of a peroxide as a catalyst, which will fix the preservative to the wood lignin within one hour. Typically, the catalyst that can be used for the purpose is methyl ethyl ketone peroxide at 0,5% plus cobalt naphthanate also at 0,5%.

Still further according to the invention, for a biocide composition in which the second bonding agent is a polyester resin, the polyester resin may be in the form of a synthetic polyester resin tailor made for the particular application of the biocide composition and the nature of the biocide molecule. For a biocide composition having a second bonding agent in the form of an unsaturated fatty acid of an oil, the unsaturated fatty acid of an oil may be a tall-oil by-product of the paper and pulp industry. For a biocide composition having a second bonding agent in the form of an unsaturated fatty acid of a wax, the unsaturated fatty acid of a wax may be a by-product of the coal-gasification petroleum industry.

Further according to the invention, the biocidal composition may be dissolved in a solvent and, typically, the resultant solution may have a surfactant added to it to render it emulsifiable in water. Still further, the biocide composition may include a catalyst as mentioned above for enhancing the rate of fixation of the biocide composition to wood treated thereby.

Still further, the emulsified biocide composition will include water for the dilution thereof into a diluted form suitable for application to wood to be treated. In its diluted form, the biocide composition will typically contain 3-8% by volume rosin and 3-8% polyester or oil or wax and 1-3% by volume fungicide and a similar volume termiticide, this composition being particularly suitable for spray applications of the biocide composition. Concentrations of the above may be 5 to 10 times greater for applications where the biocide composition must be pressure impregnated into wood to be treated.

The formulation of two biocide compositions, in accordance with the invention, are described hereinafter, by way of examples, together with a description of the applications and benefits of the formulations.

A first example of a biocide composition, in accordance with the invention, which includes both a fungicide and a termiticide specified for service in soil contact includes copper as a fungicide bonded with rosin and mixed with a polyester synthesised not only with acid groups but also with basic groups to bond with boric acid as termiticide. For use the composition is diluted in benzene and in its in-use form copper typically makes up 4% by volume of the diluted composition, the rosin 8%, the basic polyester 8% and the boric acid 4%.

A second example of a biocide composition, in accordance with the invention, also includes both a fungicide and a termiticide, the composition comprising a triazine herbicidal compound such as simazine as its fungicide bonded with rosin and mixed with polyester bonded with silafluofen as termiticide. Once again, for use, this biocide composition is diluted in benzene and in its diluted form the simazine typically makes up 4% by volume of the diluted composition, the rosin 8%, the polyester 8% and the silafluofen 4%.

Clearly, the exact composition of the above biocide compositions are greatly variable, specific compositions being determined by the required treatment applications and the general environmental conditions surrounding treatment. Also, various other compositions are envisaged that include the essential components of the biocide composition of the present invention.

It is also envisaged that the biocide composition of the invention may include combinations of fungicides and termiticides for the treatment of wood against different forms of fungal and termite attack, selected fungicides and termiticides preferably forming synergistic combinations making up between 0,25% and 10% by volume of the diluted biocide composition as used in practice. More specifically, for triazine herbicidal compounds, the fungicide concentration may range from 3% to 5% by volume, whereas for fungicides such as TCMTB and MBT, the fungicide concentration shall specifically vary between 0,25% and 0,5% by volume.

Furthermore, although tall oils are considered particularly suitable as polymeric bonding agents, it must be understood that alternative oils and waxes can also be used for the purpose, either separately or in combination with one another.

The Applicant believes that despite wood being a complex porous material, the biocide composition including the rosin and polyester or oil or wax mixture will, with suitable solvents and catalysts provide for the effective broad spectrum treatment of wood against the groups of fungi referred to hereinabove and termites, insofar as it has good penetration properties, both in relation to depth of penetration and penetration uniformity. A typical catalyst that could be included int he biocide composition is methyl ethyl ketone peroxide at 0,5% plus cobalt naphthanate also at 0,5%.

The fixation properties of the biocide composition of the invention is particularly good insofar as the rosin and the polyester resin, oil or wax bond with the C=C bonds of the wood treated as well as with the fungicide and the termiticide.

Also, the rosin fixative ensures cheap, effective fixation of the biocide and the polyester, oil or wax polymer mixed therewith ensures the facilities of both water repellency and the inclusion of other biocides tailored to effectively protect wood in the whole range of specific environmental conditions likely to be encountered when the wood is in service. Also, the polyester co-polymerises with the rosin ensuring the complete polymerisation of the rosin, and vice versa in cases such as example 1 above, and, as a result, the polymeric nature of the composition ensures effective fixation of the biocide, the composition being effectively water repellent and not leachable in transport, heavy rainfall and/or flood irrigation of treated timber in service.

Still further, the biocide composition of the invention is considered relatively stable insofar as it will remain active for suitable periods of time and is not adversely affected by normal ambient temperatures, ultra-violet radiation, humidity, and other environmental conditions.

However, the fungicide, typically copper, is attached to the preservative network through the carboxylic acid groups supplied by each of the polymeric components of the formulation. The biocidal mechanism is based on the release of copper within the polymeric matrix by hydrolysis under wet conditions and on the reforming of the bond on redrying of the wood in service. This wood preservative system can therefore allow the fungicide molecularly free, but still retained within the polymeric matrix, therefore available when needed (i.e. in wet conditions when fungi are active), while remaining effectively fixed when not needed in dry conditions.

It is anticipated further that biocide compositions, in accordance with the invention, can be provided for treating wood against a wide range of fungi and termites by the suitable selection of a particular fungicide and termiticide, or a combination thereof and, particularly, by the selection of biocides that form synergistic combinations enhancing their effective inherent properties. Still further, the above examples of the biocide composition of the invention include the required attribute of low mammalian toxicity and general environmental acceptability.

Although the biocide composition of the invention and, particularly the examples set out above, are considered particularly suitable for the treatment of timber, particularly timber destined for soil conditions and storage and transport above ground in hot and humid conditions, the biocide composition can be used for various other applications, such as non-discolouring hardening and generally for the treatment of timber and other materials, particularly when good penetration with internal polymerization for biocide fixation and water repellent qualities are required.

Use of the biocide composition of the invention also may be associated with various other advantages in that by using suitable solvents equipment-clogging can be prevented, and use of specific formulations will permit solvent recovery with only the rosin-polyester mixture remaining in wood treated.

With the use of rosin as a bonding and blocking agent, the biocide composition will be relatively economical to manufacture, whereas the combination of the rosin with a polyester will provide for co-polymerisation and, in some cases, blocking to retain the polyester-termicide complex after treatment of wood to thereby ensure a very stable polymeric mixture in the wood, which will not leach or otherwise separate from the wood.

Referring to the formulation of the first example above, the use of boric acid with a basic polyester will result in a complex with some, but reduced, ability to bond with wood and to co-polymerise with the rosin-copper complex. Therefore, to overcome this deficiency of the basic polyester-boric acid complex, in this example the rosin continues to function (as before), both as a wood and copper bonding agent and as a self and as a co-polymerising agent. An important additional function of the rosin is that when polymerised it also performs a third function, to act as a blocking agent which thus prevents loss of any of the polyester-boric acid complex not completely bonded to wood or completely co-polymerised with the rosin-copper complex.

## Claims

1. A biocide composition which comprises a mixture characterized in that it includes
carboxylic acid groups of a resin acid of rosin, forming a first bonding agent; and
carboxylic acid groups of one of a synthetic unsaturated polyester resin, an unsaturated fatty acid of an oil and an unsaturated fatty acid of a wax, forming a second bonding agent,
one bonding agent having a fungicide bonded therewith and the other bonding agent having a termiticide bonded therewith.

2. A biocide composition as claimed in Claim 1, characterized in that the fungicide is of a type that can treat wood against decay fungi.

3. A biocide composition as claimed in Claim 1 or Claim 2, characterized in that the fungicide is a formulation of any one of copper sulphate; chromated copper arsenate; ammoniacal copper zinc arsenate; ammoniacal copper arsenate; and a mixture of these formulations of copper.

4. A biocide composition as claimed in Claim 1 or Claim 2, characterized in that the fungicide is an anti-fungal formulation of any one of an alkylammonium compound such as the quaternary ammonium compound didecylmethylammonium chloride; ammoniacal copper-alkylammonium compounds such as the ammoniacal copper quaternary ammonium compound known as ammoniacal copper-didecylmethylammonium chloride; and a mixture thereof.

5. A biocide composition as claimed in Claim 1 or Claim 2, characterized in that the fungicide is a formulation such as a triazine herbicidal compound falling within a group including atrazine; simazine; diuron; terbuthylazine; alachlor; bromacil; metolachlor and a precursor of these such as 2,4,6, trichloro-1,3,5 triazine; and a mixture thereof.

6. A biocide composition as claimed in Claim 1 or Claim 2, characterized in that the fungicide is a formulation falling within the group including oxine copper known as copper 8-quinolonolate, which is a copper chelate with 8-hydroxy quinoline with the oil soluble form being made from nickel-2-ethyl hexoate; a substituted isothiazolone such as 4,5-dichloro-2-n-octyl-4-isothiazolin-3-one; 2,4,5,6-tetrachloroisophthalonitrile known as chlorothalonil at 4.0 - 0.8kg per cubic metre of wood; a thiazole such as 2-thiocyanomethylthiobenzothiazole; methylene-bis-thiocyanate; acarbamate such as 3-iodo-propenyl butyl carbamate; a triazole such as one of those known as azaconazole, propiconazole or tebuconazole; and a mixture of any two or more of the above.

7. A biocide composition as claimed in any one of the preceding claims, characterized in that the termiticide is of a type suitable for treating wood specifically against subterranean termites.

8. A biocide composition as claimed in Claim 7, characterized in that the termiticide is one of chloropyriphos; silafluofen; and one of the pyrethroids.

9. A biocide composition as claimed in Claim 7, characterized in that the termiticide is of a type showing activity also against decay fungi.

10. A biocide composition as claimed in Claim 9, characterized in that the termiticide has an active ingredient including one of an inorganic boron compound such as borax; boric acid; and disodiumoctaborate tetrahydrate.

11. A biocide composition as claimed in Claim 9, characterized in that the termiticide is one of copper 8 quinolate; zinc naphthanate; and copper naphthanate.

12. A biocide composition as claimed in any one of the preceding claims, characterized in that the rosin is a rosin which is reacted with sodium sulphate to form the sodium soap of the rosin.

13. A biocide composition as claimed in any one of the preceding claims, characterized in that the second bonding agent is a polyester resin in the form of a synthetic polyester resin tailor made for the particular application of the biocide composition.

14. A biocide composition as claimed in any one of Claims 1 to 12, characterized in that the second bonding agent is an unsaturated fatty acid of an oil which is a tall-oil by-product of the paper and pulp industry.

15. A biocide composition as claimed in any one of Claims 1 to 12, characterized in that the second bonding agent is an unsaturated fatty acid of a wax which is a by-product of the coal-gasification petroleum industry.

16. A biocide composition as claimed in any one of the preceding claims, characterized in that it is dissolved in a solvent.

17. A biocide composition as claimed in Claim 15, characterized in that the solvent has a surfactant added to it to render it emulsifiable in water.

18. A biocide composition as claimed in any one of the preceding claims, characterized in that it includes a catalyst for enhancing the rate of fixation of the biocide composition to wood treated thereby.

19. A biocide composition as claimed in any one of the preceding claims, characterized in that it includes water for the dilution thereof into a diluted form suitable for application to wood to be treated.
